(19)

(11) **EP 2 926 992 B1**

(12) # EUROPÄISCHE PATENTSCHRIFT

(45) Veröffentlichungstag und Bekanntmachung des Hinweises auf die Patenterteilung:
**10.05.2017 Patentblatt 2017/19**

(51) Int Cl.:
***B32B 27/36*** *(2006.01)* ***C08J 5/18*** *(2006.01)*
***C08K 3/22*** *(2006.01)* ***C08K 3/28*** *(2006.01)*
***C08L 67/02*** *(2006.01)*

(21) Anmeldenummer: **15000812.6**

(22) Anmeldetag: **18.03.2015**

(54) **WEISSE BIAXIAL ORIENTIERTE POLYESTERFOLIE MIT ERHÖHTER TEMPERATURLEITFÄHIGKEIT**

WHITE BIAXIALLY ORIENTED POLYESTER FILM WITH INCREASED THERMAL CONDUCTIVITY

FEUILLE BLANCHE EN POLYESTER ORIENTÉE BIAXIALEMENT À HAUTE CONDUCTIBILITÉ THERMIQUE

(84) Benannte Vertragsstaaten:
**CH DE FR GB LI LU**

(30) Priorität: **24.03.2014 DE 102014205403**
**07.04.2014 DE 102014206696**

(43) Veröffentlichungstag der Anmeldung:
**07.10.2015 Patentblatt 2015/41**

(73) Patentinhaber: **Mitsubishi Polyester Film GmbH**
**65203 Wiesbaden (DE)**

(72) Erfinder:
- **Jesberger, Martin**
  **D-55126 Mainz (DE)**
- **Kliesch, Holger**
  **D-65462 Ginsheim-Gustavsburg (DE)**
- **Kuhmann, Bodo**
  **D-65594 Runkel (DE)**
- **Bork, Andreas**
  **D-65203 Wiesbaden (DE)**
- **Altenhofen, Deborah**
  **D-55118 Mainz (DE)**
- **Janssens, Bart**
  **65510 Idstein (DE)**

(74) Vertreter: **Schweitzer, Klaus et al**
**Plate Schweitzer Zounek**
**Patentanwälte**
**Rheingaustrasse 196**
**65203 Wiesbaden (DE)**

(56) Entgegenhaltungen:
**EP-A1- 1 176 004** **EP-A2- 1 099 543**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 926 992 B1

Printed by Jouve, 75001 PARIS (FR)

## Beschreibung

Die Erfindung betrifft eine ein- oder mehrschichtige weiße, biaxial orientierte Polyesterfolie, die eine gegenüber herkömmlichen Folien solcher Art erhöhte Temperaturleitfähigkeit aufweist. Die Folie besteht aus einem thermoplastischen Polyester, Titandioxid als Weißpigment und Titannitrid als Temperaturleitfähigkeitsadditiv. Die Erfindung betrifft weiterhin ein Verfahren für die Herstellung der Folie und ihre Verwendung, insbesondere als Joghurtdeckel.

Hintergrund/Stand der Technik

Weiße biaxial-orientierte Polyesterfolien - sowohl als Monofolien als auch als coextrudierte Mehrschichtfolien - sind schon lange bekannt (z.B. DE 102005058917 A1). Ebenfalls bekannt ist, dass schon seit langem versucht wird, solche Folien in der Lebensmittelindustrie als Ersatz für Aluminiumfolien (sog. "Aluplatinen") als Deckelfolie zum Abpacken von Joghurts einzusetzen (z.B. EP 1 176 004 A1). Gegenüber der Aluplatine, die im physikalischen Sinne ein Leiter ist, hat die Polyester-Platine, die im physikalischen Sinne ein Isolator ist, den Nachteil, dass Wärme durch die Folie langsamer geleitet wird. Joghurtdeckel werden üblicherweise in einem Siegelvorgang auf die Joghurtbecher aufgebracht. Dazu werden die mit einem Siegellack oder einer Siegelschicht versehenen Deckelfolien (Platinen) auf die gefüllten Becher aufgelegt und mittels einer beheizbaren Siegelbacke auf die Becher-Randflächen gesiegelt. Dies geschieht heutzutage vollautomatisch, wobei gleichzeitig mehrere Dutzend Joghurtbecher versiegelt werden. Der zeitlich limitierende Faktor bei diesem Siegelvorgang ist der Wärmeübergang von der Siegelbacke (durch die Platine) zur Siegelschicht. Bei einer Platine aus gut temperaturleitfähigem Aluminium geschieht dies wesentlich schneller als bei einer Platine aus schlecht temperaturleitfähigem Polyester. Beim Abpacken der Joghurtbecher mit einer Polyester-Platine verlängern sich deshalb - im Vergleich zum Industriestandard Aluplatine - die Siegeltaktzeiten, was ein gravierender Ausbeuteverlust bedeutet. Dies ist ein wesentlicher Grund dafür, dass Polyesterfolien - trotz besserer Ökobilanz - immer noch nicht flächendeckend den Aluminiumdeckel substituiert haben.

Es bestand demnach die Aufgabe, eine weiße, biaxial orientierte Polyesterfolie zur Verfügung zu stellen, die die oben erwähnten Nachteile nicht aufweist und eine gegenüber herkömmlichen weißen, biaxial orientierten Polyesterfolien erhöhte Temperaturleitfähigkeit aufweist.

Aus dem Bereich der Polyesterflaschen ist es bekannt, in einen Polyesterrohstoff sogenannte "reheat agents" einzuarbeiten (US-7,368,523- B2, EP-2 270 094 A1); ein bekanntes "reheat agent" ist Titannitrid (TiN). In der Polyester-Flaschenindustrie werden Polyester-Rohlinge (sogenannte Vorformlinge) mit Hilfe von IR-Strahlung erhitzt und aufgeblasen. Dabei absorbiert das in dem Polyester eingearbeitete "reheat agent" die IR-Strahlung und gibt sie an die umgebende Polyestermatrix ab. Bereits geringe Mengen von z.B. TiN (< 25ppm) erhöhten die Ausbeute beim Aufblasen der Rohlinge beträchtlich.

Bei der Herstellung von Polyesterflaschen funktioniert dieses Prinzip des Energietransports in die Polyestermatrix sehr gut. Die Vorformlinge sind transparent und der Polyester ist amorph, zwei Voraussetzungen, die in weißen, biaxial orientierten Polyesterfolien jedoch nicht gegeben sind. Der Fachmann auf dem Gebiet der biaxial orientierten Polyesterfolien käme in Kenntnis des oben erläuterten Wirkprinzips nicht auf den Gedanken, "reheat agents" für Polyesterflaschen in weißen, biaxial orientierten Polyesterfolien mit dem Ziel der Verbesserung der Temperaturleitfähigkeit einzusetzen, weil er befürchten muss, dass die mechanischen Eigenschaften (wie Schrumpf, E-Modul, Reißfestigkeit etc.) der weißen, biaxial orientierten Polyesterfolie beeinträchtigt werden. Im Gegensatz zu amorphem Polyester besteht bei biaxial orientiertem, also kristallinem Polyester die Gefahr, dass bei einer Temperaturerhöhung durch die Energieabgabe der eingebundenen "reheat agent"-Partikel die "eingefrorene" Orientierung aufgehoben wird, was sich in einem Schrumpfen der Folie bemerkbar macht. Die Orientierung der Folie geht lokal (an den Stellen, an denen "reheat agent"-Partikel sitzen) verloren, was sich makroskopisch in "welligen" Yoghurtdeckeln und gegebenenfalls verzerrten Aufdrucken negativ bemerkbar macht.

Darüber hinaus hat der Fachmann Zweifel, dass bei dem für diesen Anwendungszweck notwendigen hohen Weißpigmentfüllgrad die IR-Strahlung überhaupt die im Polyester engebetteten "reheat agents" erreichen würde.

In der JP 61-278558 werden zwar TiN-Partikel auch in einer biaxial orientierten Folie eingesetzt. Diese ist aber transparent. Außerdem wird die Folie nicht als Deckelfolie eingesetzt und kommt folglich nicht mit Siegelbacken in Kontakt. Die JP 61-278558 offenbart eine Polyesterzusammensetzung aus einem Polyester (insbesondere PET) und mikropartikulärem Titannitrid. Der Anteil des TiN wird mit 0,01 - 20 Gew.-%, bevorzugt 0,05 bis 10 Gew.-% angegeben. In Beispiel 4 wird eine biaxial orientierte Polyesterfolie mit TiN mit einem mittleren Teilchendurchmesser von 0,2 $\mu$m offenbart.

Auch in der JP 06-279599 werden biaxial orientierte Polyesterfolien beschrieben, die zwei Arten von Partikeln enthalten. Partikelart A wird ausgewählt aus $\alpha$-$Al_2O_3$, $\gamma$-$Al_2O_3$, $\delta$-$Al_2O_3$, Zirkondioxid, Titannitrid oder organischen Polymeren, wobei die Konzentration 0,1 - 2 Gew.-% und der mittlere Teilchendurchmesser 5 bis 400 nm beträgt. Partikelart B wird ausgewählt aus $SiO_2$, Calciumcarbonat, Aluminiumoxid, Rutil-$TiO_2$ und organischen Polymeren, die mit 0,4 bis 10 Gew.-% bei einem mittleren Teilchendurchmesser von 400 bis 1500 nm zugesetzt werden. Auch diese Folie wird nicht als Deckelfolie eingesetzt, die Partikel dienen hier als "Antiblock-Partikel" (="slip agent", "anti-blocking agent", Gleitmittel).

Schließlich beschreiben J. Bott, A. Störmer, G. Wolz und R. Franz in ihrer Poster presentation at the 5th international Symposium on Food Packaging, "Studies on the migration of titanium nitride nanoparticles in polymers", 14-16 November 2012, Berlin, eine Polyethylenfolie mit TiN und untersuchen deren Migrationsverhalten. Eine Verwendung solcher Folien wird dort nicht beschrieben.

Aufgabenstellung

Demnach stellte sich die erweiterte Aufgabe, eine weiße, biaxial orientierte Polyesterfolie zur Verfügung zu stellen, die die oben erwähnten Nachteile nicht aufweist und eine gegenüber herkömmlichen weißen, biaxial orientierten Polyesterfolien erhöhte Temperaturleitfähigkeit aufweist, wobei die Polyesterfolie dimensionsstabil bleibt, d.h. einen maximalen Schrumpf (bzw. Ausdehnung) in den zwei orthogonalen Richtungen Maschinenrichtung ⊥ Querrichtung (MD ⊥ TD) von 0,7-2,0%, bevorzugt 0,8-1,6%, besonders bevorzugt 0,9-1,4% in MD und -0,5-2,0%, bevorzugt -0,3-1,6%, besonders bevorzugt -0,1-1,4% in TD aufweist (gemessen nach 15 Min. Temperung bei 150°C; nach ASTM D2732-83).

Kurze Beschreibung der Erfindung

Gelöst wird diese Aufgabe durch eine ein- oder mehrschichtige weiße, biaxial orientierte, Polyesterfolie, wobei mindestens eine Schicht, im Falle einer Mehrschichtfolie mindestens die Basisschicht (B),

- als weißfärbendes Pigment Titandioxid in einer Konzentration von 3 bis 15 Gew.-% , und
- nanopartikuläres Titannitrid in einer Konzentration von 1 bis 25ppm enthält, wobei die Gewichtsprozentangaben auf die jeweilige Schicht bezogen sind, in der die angegebenen Materialien enthalten sind.

Völlig überraschend hat sich herausgestellt, dass das Titannitrid in irgendeiner Weise für die Polyester-Platine zur Verbesserung der Temperaturleitfähigkeit beiträgt. Überraschend war dies insbesondere deshalb, weil die Erwärmung der (nachträglich aufgebrachten) Siegelschicht nicht mit Infrarotstrahlern erfolgte sondern durch Kontakt mit einer Siegelbacke. Vermutlich wird die über die Siegelbacke aufgebrachte Wärme innerhalb des Polyesterdeckels mit Hilfe der TiN-Partikel schneller durch die Folie geleitet als erwartet. Die Zeit, die benötigt wird, um die Siegelschicht auf minimale Siegeltemperatur (=Siegelanspringtemperatur) zu erhitzen ist kürzer, als bei der bis auf die TiN-Partikel identischen im Handel befindlichen weißen Polyester-Platine.

Klassisch wird der Yoghurtdeckel vor dem Einsatz mit einem Siegellack lackiert, die gegenüberliegende Seite bedruckt und geprägt (damit sich die Deckel in den Batterien der Siegelstation besser vereinzeln lassen). Der Wärmeeintrag über die Siegelbacke erfolgt von der bedruckten Seite. Die Wärme geht durch die Deckel hindurch und erwärmt die gegenüberliegende Siegelschicht. Im Vergleich zum Standard-Polyesterdeckel stellte sich im Experiment völlig überraschend heraus, dass sich unter ansonsten gleichen Bedingungen die Siegelanspringtemperatur in der TiN-modifizierten Variante erniedrigte. Dies führt in der Molkerei zu einer Erhöhung der Abpackrate und somit zu einer besseren Wirtschaftlichkeit gegenüber einem Standard-Polyesterdeckel.

Des weiteren überraschend war, dass sich die erfindungsgemäße Folie während des Siegelvorgangs nicht bzw. nur unwesentlich verformt; d.h. ihr Schrumpf in Maschinenrichtung (MD) wie Querrichtung (TD) war nur minimal (0,7-2,0%, bevorzugt 0,8-1,6%, besonders bevorzugt 0,9-1,4% in MD und -0,5-2,0%, bevorzugt -0,3-1,6%, besonders bevorzugt -0,1-1,4% in TD; gemessen nach 15 Min. Temperung bei 150°C nach ASTM D2732-83). Die aufgesiegelten Deckel waren faltenfrei und der zuvor aufgebrachte Druck verzerrungsfrei.

Detaillierte Beschreibung der Erfindung

Die erfindungsgemäße Folie ist einschichtig oder mehrschichtig, wobei die Schichten sich auf die reine Polyesterfolie beziehen und etwaige Siegellackschichten und/oder Drucke nicht einbezogen sind.

Im Falle der mehrschichtigen Folie ist mindestens eine Schicht dicker als jede einzelne der anderen Schichten. Diese "dickste" Schicht ist die Basisschicht (B). Die übrigen Schichten sind dann entweder Zwischenschichten oder Deckschichten, wobei eine Deckschicht immer eine äußerste Schicht darstellt, es aber nicht ausgeschlossen ist, dass auch eine Basisschicht eine äußerste, also eine Deckschicht sein kann. Zwischenschichten und Deckschichten (die keine Basisschichten sind) sind immer dünner als die Basisschicht. Üblicherweise beträgt die Dicke der Basisschicht mindestens 50%, bevorzugt mindestens 70%, besonders bevorzugt mindestens 80% der Gesamtfoliendicke.

Die Gesamtfoliendicke der erfindungsgemäßen temperaturleitfähigen Folie beträgt 30-105 μm, bevorzugt 40-70 μm, besonders bevorzugt 50-65 μm (ermittelt mittels Tastermethode nach DIN 53370:2006-11).

Die erfindungsgemäße Folie ist eine Polyesterfolie, d.h. alle Schichten bestehen zu mindestens 70 Gew.-%,

bevorzugt mindestens 80 Gew.-%, besonders bevorzugt mindestens 85 Gew.-% aus Polyester. Der Rest sind Pigmente, funktionale Partikel und/oder andere Additive.

Polyester bedeutet teilaromatischer Polyester, d.h. ein Polyester mit aromatischen und aliphatischen Gruppen. Insbesondere werden hierunter Polymere mit alternierenden aromatischen und aliphatischen Gruppen verstanden, die über Carbonyloxygruppen (-C(O)O-) miteinander verbunden sind. Die jeweiligen aromatischen bzw. aliphatischen Gruppen entstammen Dicarbonsäuren und Diolen bzw. deren Derivaten wie Dimethylester, die in einer Polykondensationsreaktion nach bekannten Verfahren zum Polyester kondensiert werden.

Bevorzugt handelt es sich bei den aromatischen Gruppen um Phenyl, insbesondere 1,3- und 1,4-Phenyl oder Naphthyl, insbesondere 2,6- oder 2,7-Naphthyl. Bei den aliphatischen Gruppen handelt es sich bevorzugt um Ethylen, 1,2- oder 1,3-Propylen, 1,2-, 1,3- oder 1,4-Butylen oder Cyclohexylen oder deren durch Kondensation entstandene Dimere wie Ethylenoxyethylen, seltener auch um n-, iso-oder tert.-$C_5$-$C_{10}$-Alkylene.

Besonderes bevorzugte Polyester sind Polyethylenterephthalat (PET) und Polyethylennaphthalat (PEN), wobei diese ihrerseits einen maximalen Copolyesteranteil von 20 mol-%, bevorzugt maximal 10 mol-%, besonders bevorzugt maximal 5 mol-% aufweisen können. Als mögliche Copolyesteranteile können alle oben genannten, nicht in PET bzw. PEN enthaltenen Aryle und/oder Alkyle vorkommen, insbesondere 1,3-Phenyl (aus Isophthalsäure) und Ethyloxyethyl (DEG).

Die erfindungsgemäße Folie ist weiß, d.h. sie hat beidseitig einen Weißgrad (nach Berger) von mindestens 70, bevorzugt mindesten 75, besonders bevorzugt mindestens 80. Die Transparenz einer 50μm dicken erfindungsgemäßen Folie liegt bei 15-35%, bevorzugt bei 20-33% und besonders bevorzugt bei 25-30%.

"Biaxial orientiert" bedeutet, dass die Folie nach einem Streckverfahren hergestellt wurde, wobei der Polyester kristallisiert. Bei dem Streckverfahren wird eine kontinuierlich durch eine Breitschlitzdüse extrudierte Polyestermasse auf einer Kühlwalze zu einer amorphen Vorfolie abgekühlt und dann sequentiell oder simultan um mindestens den Faktor 2 jeweils in Produktionsrichtung (=Maschinenrichtung oder MD) und senkrecht zur Produktionsrichtung (= Quer- oder transverse Richtung oder TD) gestreckt, was eine entsprechende Orientierung der Polymerketten und Änderung der mechanischen Eigenschaften bewirkt.

Zur Verbesserung der Temperaturleitfähigkeit enthält die Polyesterfolie Titannitrid (TiN). Ist die Folie mehrschichtig, so enthält zumindest die Basisschicht TiN; bevorzugt enthalten alle Schichten der Folie TiN. Die Titannitridkonzentration in den einzelnen Schichten der Folie liegt jeweils zwischen 1 und 25ppm, bevorzugt zwischen 2 und 23ppm und besonders bevorzugt zwischen 3 und 20ppm (bezogen auf das Gewicht der jeweiligen Schicht der Folie).

Eine Titannitridkonzentration von unter 1 ppm hat eine kaum messbare Erhöhung der Temperaturleitfähigkeit, im Vergleich zu einer Folie mit der gleichen Formulierung, jedoch ohne Titannitrid, zur Folge.

Eine Zugabe von mehr als 25 ppm erhöht die Temperaturleitfähigkeit nicht wesentlich weiter und wäre unwirtschaftlich.

Die Primärteilchengröße ($d_{50}$) der TiN-Partikel liegt unter 100 nm, bevorzugt unter 80 nm und besonders bevorzugt unter 70 nm. Die eingesetzten TiN-Partikel sind damit Nanopartikel. Nach unten ist die Teilchengröße nicht beschränkt. TiN-Partikel dieser Art reflektieren Tageslicht blau, im Gegensatz zu den größeren Teilchen (>100 nm) die goldfarben erscheinen. Liegt die Primärteilchengröße deutlich oberhalb von 100 nm erscheinen die TiN-Partikel nicht mehr blau.

Es ist bisher nicht gelungen, sowohl die Menge als auch die Primärteilchengröße der TiN-Partikel in der erfindungsgemäßen Folie zu bestimmen. Die Primärteilchengröße lässt sich derzeit nur an den kommerziell erhältlichen Partikeln (in Reinform oder als Suspension) beispielsweise mittels Transmissionselektronenmikroskop (automatisches Auszählen der Partikel und statistische $d_{50}$-Bestimmung mittels Gerätesoftware auf eine Fehlertoleranz von ±10 nm) oder mittels Nanoparticle Tracking Analysis (NTA) (beispielsweise in einem NanoSight NS500 von Malvern Instruments Inc., Worcestershire, UK) ermitteln. Der Nachweis der TiN-Partikel in der erfindungsgemäßen Folie erfolgt demnach indirekt durch Bestimmung der Temperaturleitfähigkeit. Liegt diese bei einer 50 μm dicken Folie bei größer/gleich 0,090, bevorzugt größer/gleich 0,091, besonders bevorzugt größer/gleich 0,093 $mm^2/s$, so enthält die Folie TiN in der erfindungsgemäßen Menge und bevorzugt auch Partikelgröße.

Die Zugabe von Titannitrid kann sowohl über ein Masterbatch als auch über eine Flüssigdosierung (d.h. Zugabe z.B. eines TiN/Ethylenglycol-Slurrys direkt in den Extruder) erfolgen, ohne einen Unterschied in der Temperaturleitfähigkeit zu erkennen. Eine Monofolie zeigte dabei den gleichen Effekt, wie eine koextrudierte Mehrschichtfolie, wenn das Titannitrid in der vorgegebenen Konzentration in allen Schichten vorhanden ist.

Durch die Zugabe der nanopartikulären TiN-Partikel wird die Gelbzahl der Folie in Richtung blau verändert. Die Farbe der Folie ändert sich von gelblich-weiß (ohne TiN) zu blau-weiß (mit TiN), was im Verpackungsmarkt positiv bewertet wird. Der Joghurtdeckel wirkt dadurch hochwertiger und beeinflusst die Kaufentscheidung des Verbrauchers positiv durch die höhere Werbewirksamkeit.

Die erfindungsgemäße weiße Polyesterfolie erhält ihre weiße Farbe durch Weißpigmente. In der erfindungsgemäßen Folie wird ausschließlich Titandioxid als Weißpigment eingesetzt, wobei dieses wiederum bevorzugt in der Rutil-Modifikation zum Einsatz kommt. Im Gegensatz zu Titandioxid in der Anatas-Modifikation besitzt Rutil-$TiO_2$ eine

höhere Deckkraft (führt zu einer höheren optischen Dichte bzw. niedrigeren Transparenz), was zur Folge hat, dass das intensiv dunkelblaue Titannitrid die Gelbzahl nur geringfügig beeinflusst (s. Beispiele).

Ist die Folie mehrschichtig, so enthält zumindest die Basisschicht $TiO_2$; bevorzugt enthalten alle Schichten der Folie $TiO_2$. Die Titandioxidkonzentration in den einzelnen Schichten der Folie liegt jeweils zwischen 3,0 und 15,0 Gew.-%, bevorzugt zwischen 3,5 und 14,0 Gew.-% und besonders bevorzugt zwischen 4,0 und 13,0 Gew.-% (bezogen auf das Gewicht der jeweiligen Schicht der Folie).

Eine geringere Konzentration an Titandioxid als 3,0 Gew.-% ist unvorteilhaft, da die Folie dann zu blaustichig ist. Außerdem ist die Transparenz für die Anwendung als Deckelfolie zu hoch (d.h. die optische Dichte ist zu gering). Eine Zugabe von mehr als 15 Gew.-% Titandioxid führt zu einer Verschlechterung der Laufsicherheit, d.h. die Folie wird brüchig und die Abrisse während der Produktion häufen sich bis hin zur Unwirtschaftlichkeit.

Die Teilchengröße ($d_{50}$, gemessen mittels Laserlichtstreuung, z.B. in einem Mastersizer 2000 von Malvern Technologies Inc. Worcestershire, UK) der $TiO_2$-Partikel ist nicht kritisch, solle aber zweckmäßigerweise zwischen 0,5 und 0,1 $\mu$m, bevorzugt zwischen 0,4 und 0,2 $\mu$m liegen. Liegt sie unter 0,1 $\mu$m ist die Folie zu transparent, liegt sie über 0,5 $\mu$m ist die Folie zu matt und zu abrasiv.

Die eingesetzten $TiO_2$-Partikel sind bevorzugt anorganisch beschichtet/dotiert und optional zusätzlich organisch beschichtet. Die bevorzugten anorganischen Beschichtungen bzw. Zuschlagstoffe zum $TiO_2$ sind dabei $SiO_2$, bevorzugt $Al_2O_3$ und besonders bevorzugt Kombinationen aus $SiO_2$ und $Al_2O_3$. Der Anteil an $SiO_2$ und $Al_2O_3$ liegt bevorzugt bei > 0,7 Gew.-% (bezogen auf das $TiO_2$), besonders bevorzugt bei > 1,0 Gew.-% und ganz besonders bevorzugt bei > 1,5 Gew.-%. Ein Maximum von 10 Gew.-% sollte jedoch nicht überschritten werden. Die anorganischen Beschichtungskomponenten in den angegebenen Gewichtsanteilen sind besonders günstig, da hierdurch die photosensibilisierende Wirkung des $TiO_2$ reduziert bzw. ganz unterbunden wird, was eine Verlangsamung der UV-Alterung der Folie bewirkt und somit einen UV-Schutz bietet. Einerseits reduziert die anorganische Beschichtung die katalytisch wirksame Oberfläche des $TiO_2$, die zu einer Vergilbung und Versprödung der Folie führen kann, andererseits wirkt sich eine organische Beschichtung positiv auf die Einarbeitung des $TiO_2$ in den Polyester aus (homogenere Verteilung, keine Agglomerate/Gele). Geeignete $TiO_2$-Typen sind kommerziell erhältlich. Beispielhaft seien R-105 und R104 von DuPont (USA) und Rodi® von Sachtleben (Deutschland) genannt.

Die Folie gemäß der Erfindung kann weiterhin anorganische oder organische Zusatzmittel enthalten, die zur Einstellung der Oberflächentopographie benötigt werden. Die Menge der eingesetzten Zusatzmittel ist abhängig von den verwendeten Substanzen und ihrer Teilchengröße. Ihre mittlere Teilchengröße liegt im Allgemeinen im Bereich von 0,01 bis 10 $\mu$m, vorzugsweise von 0,1 bis 5 $\mu$m, und insbesondere von 0,3 bis 3,0 $\mu$m.

Geeignete Zusatzmittel zur Erzielung einer geeigneten Rauheit sind z. B. Kalziumcarbonat, Apatit, Siliziumdioxid, Aluminiumoxid, vernetztes Polystyrol, vernetztes PMMA, Zeolithe und andere Silikate und Aluminiumsilikate. Diese Zusatzmittel werden im Allgemeinen in Mengen von 0,05 bis 30 Gew.-%, vorzugsweise 0,1 bis 1 Gew.-% eingesetzt.

Die erfindungsgemäße Folie ist entweder ein- oder mehrschichtig. Die erfindungsgemäßen mehrschichtigen Folien bestehen aus einer Basisschicht B, mindestens einer Deckschicht A oder C und gegebenenfalls weiteren Zwischenschichten, wobei insbesondere ein dreischichtiger A-B-C-Aufbau bevorzugt ist. Für mehrschichtige Aufbauten ist es weiter vorteilhaft, wenn alle eingesetzten Polyester eine ähnliche Viskosität bei der gewünschten Extrusionstemperatur aufweisen. Die Deckschichten A und/oder C können gegebenenfalls weitere Funktionalitäten aufweisen wie Siegelfähigkeit, Hochglanz, Mattierung, Farbigkeit usw.

Die Dicke der Deckschicht/en wird unabhängig von den anderen Schichten gewählt und liegt bevorzugt im Bereich von 0,1 bis 10 $\mu$m, insbesondere 0,2 bis 5 $\mu$m, vorzugsweise 1 bis 3 $\mu$m, wobei beidseitig aufgebrachte Deckschichten bezüglich Dicke und Zusammensetzung gleich oder verschieden sein können. Die Dicke der Basisschicht ergibt sich entsprechend aus der Differenz von Gesamtdicke der Folie und der Dicke der aufgebrachten Deck- und Zwischenschicht/en und kann daher analog der Gesamtdicke innerhalb weiter Grenzen variieren. Zwischenschichten und Deckschichten (die keine Basisschichten sind) sind immer dünner als die Basisschicht. Üblicherweise beträgt die Dicke der Basisschicht mindestens 50%, bevorzugt mindestens 70%, besonders bevorzugt mindestens 80% der Gesamtfoliendicke.

Ebenso kann die Folie zur Einstellung weiterer Eigenschaften nach der Extrusion beschichtet werden, wobei diese nicht-coextrudierten Beschichtungen nicht zu den beispielsweise für die Berechnung der Partikelkonzentration heranzuziehenden Schichten der erfindungsgemäßen Folie zählen. Typische Beschichtungen dieser nicht-coextrudierten Art sind insbesondere haftvermittelnde Beschichtungen, antistatische Beschichtungen, schlupfverbessernd oder dehäsiv wirkende Beschichtungen. Es bietet sich an, diese zusätzlichen Beschichtungen über in-linecoating mittels wässriger Dispersionen nach der Längs- und vor der Querstreckung (s. Herstellverfahren unten) auf die Folie aufzubringen.

Herstellverfahren

Das Verfahren zur Herstellung der Folie sieht vor, dass die Folienrohstoffe - ggf. nach einer Vortrocknung - in Extrudern aufgeschmolzen, homogenisiert, durch eine Breitschlitzdüse auf eine Kühlwalze ausgepresst und dort zu einer Vorfolie abgekühlt werden, danach die Vorfolie in Längs- und Querrichtung streckorientiert, hitzefixiert und schließlich aufgewickelt wird.

Wenn an der Folienherstellungsmaschine Zwei- oder Mehrschneckenextruder vom Entgasungstyp eingesetzt werden, dann können prinzipiell alle Einsatzstoffe direkt in den Extruder eindosiert werden.

Im Allgemeinen hat es sich als günstig erwiesen, wenn die Titannitrid-Partikel bereits vor der Folienextrusion in einen Polyesterrohstoff als Masterbatch eingearbeitet wurden. Dieser Masterbatch enthält 100 bis 2000 ppm, bevorzugt 200 bis 1000 ppm und besonders bevorzugt 300 bis 600 ppm TiN, der Rest zu 100 Gew.-% ist Polyester. Die TiN-Partikel können dem Polyester dabei bereits bei der Herstellung aus den Monomeren oder als Partikel in den Polyester des Masterbatch in einem Mehrschneckenextruder (Extrusionsmasterbatch) nach bekannten Verfahren eingebracht werden.

Auch die Titandioxid-Partikel werden zweckmäßigerweise bereits vor der Folienextrusion in einen Polyesterrohstoff als Masterbatch eingearbeitet. Dieser Masterbatch enthält 10 bis 80 Gew.-% $TiO_2$ und 90 bis 20 Gew.% Polyester. Besonders bevorzugt liegt der Gehalt an $TiO_2$ in diesem Polyestermasterbatch bei 10 bis 60 Gew.-%. Die $TiO_2$-Partikel können dem Polyester dabei bereits bei der Herstellung aus den Monomeren oder als Partikel in den Polyester des Masterbatch in einem Mehrschneckenextruder (Extrusionsmasterbatch) nach bekannten Verfahren eingebracht werden, was sich insbesondere bei höheren Partikelkonzentrationen von größer als 10 Gew.-% bewährt hat.

Bei dem bevorzugten Extrusions- oder Koextrusionsverfahren zur Herstellung der Folie wird so vorgegangen, dass die den einzelnen Schichten der Folie entsprechenden Schmelzen durch eine Flachdüse extrudiert bzw. koextrudiert und als weitgehend amorphe Vorfolie auf einer Kühlwalze abgeschreckt werden. Im Falle einer einschichtigen Folie wird demgemäß nur eine Schmelze durch die Düse extrudiert. Diese Folie wird anschließend erneut erhitzt und in Längs- und Querrichtung bzw. in Quer- und Längsrichtung bzw. in Längs-, in Quer- und nochmals und Längsrichtung und/oder Querrichtung streckorientiert ("orientiert"). Die Folientemperaturen im Streckprozess liegen im allgemeinen 10 bis 60 °C über der Glasübergangstemperatur $T_g$ des verwendeten Polyesters, das Streckverhältnis der Längsstreckung liegt üblicherweise bei 2,0 bis 6,0, insbesondere bei 2,0 bis 3,5, das der Querstreckung bei 2,0 bis 5,0, insbesondere bei 3,0 bis 4,5, und das der gegebenenfalls durchgeführten zweiten Längs- und Querstreckung bei 1,1 bis 5,0.

Die erste Längsstreckung kann auch gleichzeitig mit der Querstreckung als Simultanstreckung durchgeführt werden.

Nach der Streckorientierung folgt die Thermofixierung der Folie bei Ofentemperaturen von 180 bis 260 °C, insbesondere von 220 bis 250 °C, wobei sich diese und die nachfolgend angegebenen Temperaturen auf Polyethylenterephthalat beziehen. Anschließend wird die Folie abgekühlt und aufgewickelt.
In einer bevorzugten Ausführungsform findet die Thermofixierung zwischen 160 bis 250 °C statt, und die Folie wird bei dieser Temperatur bevorzugt um mindestens 1 %, besonders bevorzugt um mindestens 2 %, ganz besonders bevorzugt um mindestens 4 %, in Querrichtung relaxiert.

In einer weiteren bevorzugten Ausführungsform wird die Folie mindestens um den Faktor 3,0 gleichzeitig in Längs- und Querrichtung gestreckt, wobei die Streckung in einem Simultanrahmen stattfindet. Die Thermofixierung findet bei Temperaturen im Bereich von 160 bis 250 °C statt, und die Folie kann bei diesen Temperaturen in Querrichtung und bevorzugt auch in Längsrichtung relaxiert werden.

Eigenschaften der Folie

Die nachstehende Tabelle 1 fasst zweckmäßige Merkmale und Folieneigenschaften noch einmal zusammen:

**Tabelle 1**

| | **zweckmäßig** | **bevorzugt** | **besonders bevorzugt** | **Einheit** | **Messmethode** |
|---|---|---|---|---|---|
| Konzentration $TiO_2$ pro Schicht | 3,0 bis 15,0 | 3,5 bis 14,0 | 4,0 bis 13,0 | Gew.-% | |
| Konzentration TiN pro Schicht | 1 bis 25 | 2 bis 23 | 3 bis 20 | ppm | Angaben beziehen sich auf eingesetzte Partikel |
| $d_{50}$ TiN | < 100 | < 80 | < 70 | nm | Angaben beziehen sich auf eingesetzte Partikel |
| $d_{50}$ $TiO_2$ | 0,5-0,1 | 0,4-0,2 | 0,3 | µm | Laserlichtstreuung mittels Malvern 2000 |

(fortgesetzt)

| | | zweckmäßig | bevorzugt | besonders bevorzugt | Einheit | Messmethode |
|---|---|---|---|---|---|---|
| Transparenz (bei 50 μm Dicke) | | 15-35 | 20-33 | 25-30 | % | ASTM-D 1033-61 |
| Foliendicke | | 30-105 | 40-70 | 50-65 | μm | DIN 53370:2006-11 |
| Temperaturleitfähigkeit | | ≥0,090 | ≥0,091 | ≥0,093 | $mm^2/s$ | in Anlehnung an ISO 22007-4; s. unten |
| Erhöhung d. Temperaturleitfähigkeit | | >5 | >7 | >10 | % | |
| qualitativer Siegeltest | | (+) | (++) | (+++) | | intern, s. unten |
| Erniedrigung d. Gelbwertes (50μm Foliendicke) | | < -0,1 | < -0,2 | < -0,3 | ΔYI | |
| Schrumpf 150°C, 15 min. | MD | 0,7-2,0 | 0,8-1,6 | 0,9-1,4 | % | ASTM-D 2732-83 |
| | TD | -0,5-2,0 | -0,3-1,6 | -0,1-1,4 | | |

Alle vorgenannten technischen Merkmale der erfindungsgemäßen Folie, wie Eigenschaften, Rezepturbestandteile, Inhaltsstoffe etc. können sowohl einzeln als auch in beliebigen Kombinationen mit- und untereinander realisiert sein. Dass ein Merkmal erst später in der Beschreibung und gegebenenfalls isoliert oder als gesonderte "Ausführungsform" erläutert wird, bedeutet nicht, dass es nicht auch mit zuvor genannten Merkmalen kombiniert werden kann.

Zur Charakterisierung der Rohstoffe und der Folien wurden die folgenden Messmethoden benutzt:

DIN = Deutsches Institut für Normung
ASTM = American Society for Testing and Materials
ISO = International Organisation for Standardization

**Bestimmung d. Foliendicke**

Die Foliendicke wird durch mechanische Abtastung ermittelt; die Prüfung erfolgt nach DIN 53 370:2006-11.

**Schrumpf**

Der Schrumpf wurde nach ASTM D2732-83 gemessen (nach15 Minuten Temperung bei 150°C).

**Qualitativer Siegeltest**

Die Dimensionsstabilität, Verzerrung d. Aufdrucks und Beschleunigung d. Siegelverfahrens wurden qualitativ bewertet (sehr gut (+++), gut (++), befriedigend (+), mangelhaft (-), unbrauchbar (- -))

**Mittlere Teilchengröße ($d_{50}$)**

Die mittlere Teilchengröße ($d_{50}$) nicht-nanopartikulärer Partikel wird mittels Laserlichtstreuung in einem Mastersizer 2000 (Malvern Technologies Inc. Worcestershire, UK) gemessen.

Die mittlere Teilchengröße ($d_{50}$) nanopartikulärer Partikel wird mittels Nanoparticle Tracking Analysis (NTA) in einem NanoSight NS500 (Malvern Instruments Inc., Worcestershire, UK) ermittelt.

**Relative Viskosität (RV-Wert), Standardviskosität (SV-Wert)**

**Umrechnung SV in RV**

Die Standardviskosität SV wird - angelehnt an DIN 53726 - durch die Messung der relativen Viskosität $\eta_{rel}$. einer 1 Gew.-%-igen Polymerlösung in Dichloressigsäure (DCE) in einem Ubbelohde Viskosimeter bei 25° C gemessen.

Aus der relativen Viskosität $\eta_{rel.}$ wird der dimensionslose SV-Wert wie folgt ermittelt:

$$SV = (\eta_{rel.} - 1) \cdot 1000$$

Folie bzw. Polymerrohstoffe werden dazu in DCE gelöst und die Partikel vor der Messung abzentrifugiert. Der Anteil an Partikeln wird mittels Aschebestimmung ermittelt und durch entsprechende Mehreinwaage an Folie (um zu der o. g. 1 Gew.- %igen Lösung zu gelangen) korrigiert. D.h.:

$$\text{Einwaage} = (\text{Einwaagemenge laut Vorschrift}) / ((100\text{-Partikelgehalt in }\%)/100)$$

Die intrinsische Viskosität (IV) berechnet sich wie folgt aus der Standardviskosität:

$$IV = [\eta] = 6{,}907 \cdot 10^{-4}\ SV\ (DCE) + 0{,}063096\ [dl/g]$$

**Transparenz**

Die Transparenz wird nach ASTM-D 1033-61, Methode A gemessen.

**Weißgrad**

Der Weißgrad wird nach Berger bestimmt, wobei mindestens 20 Folienlagen der zu untersuchenden Folie übereinander gelegt werden. Die Bestimmung des Weißgrades erfolgt mit Hilfe des elektrischen Remissionsphotometers ELREPHO der Firma Zeiss, Oberkochem (DE), Normlichtart D65, 10° Normalbeobachter. Der Weißgrad WG wird als

$$W_{(Berger)} = Y + aZ + bX$$

mit a = 3,448 und b = 3,904 definiert, wobei X, Y und Z entsprechende Reflexionsfaktoren bei Einsatz eines X-, Y-, Z-Farbmessfilters sind. Als Weissstandard wird ein Pressling aus Bariumsulfat (DIN 5033, Teil 9) verwendet. Eine ausführliche Beschreibung ist z. B. in Hans Loos, Farbmessung, Verlag Beruf und Schule, Itzehoe (1989) beschrieben.

**Gelbzahl**

Die Gelbzahl der Folie wird nach ASTM E313-96/D65 mittels eines Spektralphotometers Typ Konica Minolta CM 3500d, Normlichtart D65, 10° Normalbeobachter bestimmt. Aus den gemessenen Normfarbwerten X, Y, Z erfolgt die Berechnung der Gelbzahl YI gemäß der Gleichung:

$$YI = [100 \times (1{,}3013 \times X - 1{,}1498 \times Z)] / Y \qquad (\text{für D65, } 10°)$$

Die Erniedrigung der Gelbzahl ergibt sich dann aus:

$$\Delta YI = YI_{mit\ TiN} - YI_{ohne\ TiN}$$

**Temperaturleitfähigkeit**

Die Temperaturleitfähigkeit der Folienproben wurde dynamisch nach dem Lichtblitz-Verfahren in Anlehnung an ISO 22007-4 gemessen. Die Messungen wurden mit einer Flash-Apparatur LFA 447 NanoFlash der Fa. Netzsch Gerätebau GmbH durchgeführt.

Zunächst wurden aus den bereitgestellten PET-Folien runde Probekörper (∅ 12,7 mm) herausgearbeitet, vorsichtig gereinigt und mit Graphit beschichtet, um ein homogenes Absorptions- und Emissionsverhalten zu gewährleisten. Das Graphit wurde mittels Graphitspray aufgetragen und trocknete anschließend auf der Probe zu einer Graphitschicht aus. Um bei den relativ dünnen Proben Schwankungen durch unterschiedliche Schichtdicken zu vermeiden, wurden stets die gleichen Sprühabstände und Sprühzeiten gewählt. Die Graphitdicke betrug 3 μm. Anschließend wurden die Probekörper mit einer Xenon-Blitzlampe in der Flash-Apparatur LFA 447 thermisch angeregt (Zündspannungen: 190 V, Pulsbreite: 0,06 ms). Der resultierende Temperaturanstieg auf der Rückseite der Proben wurde mit einem Infrarot-Halbleiterdetektor (InSb) gemessen, der mit flüssigem Stickstoff gekühlt wurde. Aus jeder Folie wurden vier Proben entnommen und vermessen, wobei für jeden Probekörper zusätzlich aus fünf Blitzbelichtungen gemittelt wurde. Anhand des mathematischen Korrektur- und Fit-Modells nach Cowan mit Verwendung einer Pulslängenkorrektur (in der Auswertesoftware des Geräteherstellers hinterlegt) wurde aus den erhaltenen Thermogrammen die Temperaturleitfähigkeit berechnet.

Bei gegebener Dichte und spezifischer Wärmekapazität lässt sich aus der gemessenen Temperaturleitfähigkeit (s.o.) auch die Wärmeleitfähigkeit nach der Formel

$$\lambda_{(T)} = a_{(T)} \cdot \rho_{(T)} \cdot c_{p(T)}$$

mit:

A = Wärmeleitfähigkeit
a = Temperaturleitfähigkeit
p = Dichte
$c_p$ = spezifische Wärmekapazität
T = Temperatur

berechnen.

Für die erfindungsgemäßen Folien ist jedoch die Temperaturleitfähigkeit als Folieneigenschaft besser geeignet, da sie direkt an der Folie bestimmbar ist, ohne Kenntnis der Materialeigenschaften Dichte und spezifische Wärmekapazität.

**Erhöhung der Temperaturleitfähigkeit**

Die Erhöhung der Temperaturleitfähigkeit wurde nach folgender Formel berechnet:

$$\text{Erhöhung der Temperaturleitfähigkeit [\%]} = \left[\frac{Temperaturleitfähigkeit\ mit TiN}{Temperaturleitfähigkeit\ ohne TiN} - 1\right] \times 100$$

<u>Beispiele</u>

**Beispiel 1**

Chips aus Polyethylenterephthalat enthaltend Titandioxid vom Rutil-Typ als Weißpigment wurden getrocknet und dem Extruder für die Basisschicht (B) zugeführt. Ebenfalls wurden Chips aus Polyethylenterephthalat enthaltend Rutil-Titandioxid als Weißpigment getrocknet und dem Extruder für die Deckschicht (A) zugeführt. Die Chips für die Deckschicht (C) enthaltend ein Titandioxid und ein Antiblockmittel für die bessere Wickelbarkeit wurden ebenfalls getrocknet.

Dann wurde durch Koextrusion und anschließende stufenweise Orientierung in Längs- und Querrichtung eine weiße, dreischichtige Folie mit ABC-Aufbau und einer Gesamtdicke von 50μm hergestellt. Die Dicke der Deckschichten betrug jeweils 5μm.
Deckschicht (A), Mischung aus:

| | | |
|---|---|---|
| 71 | Gew.-% | Polyethylenterephthalat mit einem SV-Wert von 800 |
| 12 | Gew.-% | PET-Masterbatch (PolyOne, Assesse, Belgien) mit 60 Gew.-% Titandioxid (mittlerer Teilchendurchmesser Titandioxid ca. 0,3 μm) |
| 16 | Gew.-% | Masterbatch aus 99 Gew.-% Polyethylenterephthalat (SV-Wert von 800) und 1,0 Gew.-% Sylobloc 44 H (synthetisches $SiO_2$ der Fa. Grace, mittlerer Teilchendurchmesser ca. 2,5μm) |
| 1 | Gew.-% | PET-Masterbatch (PolyOne, Saint-Ouen L'Aumone, Frankreich) mit 500ppm Titannitrid (Nanopartikel, ca. 60 nm) |

Basisschicht (B):

| | | |
|---|---|---|
| 87 | Gew.-% | Polyethylenterephthalat mit einem SV-Wert von 800 |
| 12 | Gew.-% | PET-Masterbatch der Fa. PolyOne mit 60 Gew.-% Titandioxid (mittlerer Teilchendurchmesser Titandioxid ca. 0,3 μm). |
| 1 | Gew.-% | PET-Masterbatch der Fa. PolyOne mit 500ppm Titannitrid (Nanopartikel ca. 60 nm) |

Deckschicht (C):

| | | |
|---|---|---|
| 71 | Gew.-% | Polyethylenterephthalat mit einem SV-Wert von 750. |
| 12 | Gew.-% | PET-Masterbatch der Fa. PolyOne mit 60 Gew.-% Titandioxid (mittlerer Teilchendurchmesser Titandioxid ca. 0,3 μm). |
| 16 | Gew.-% | Masterbatch aus 99 Gew.-% Polyethylenterephthalat (SV-Wert von 800) und 1,0 Gew.-% Sylobloc 44 H (synthetisches $SiO_2$ der Fa. Grace, mittlerer Teilchendurchmesser ca. 2,5μm) |
| 1 | Gew.-% | PET-Masterbatch der Fa. PolyOne mit 500ppm Titannitrid (Nanopartikel ca. 60 nm) |

Die Herstellungsbedingungen in den einzelnen Verfahrensschritten waren:

| | | | | |
|---|---|---|---|---|
| Extrusion | Temperaturen | A-Schicht<br>B-Schicht<br>C-Schicht<br>Abzugswalze | 280<br>280<br>280<br>20 | °C<br>°C<br>°C<br>°C |
| Längsstreckung | Aufheiztemp.<br>Strecktemp.<br>Längsstreckverhältnis | | 70-90<br>85<br>3,2 | °C<br>°C |
| Querstreckung | Aufheiztemp.<br>Strecktemp.<br>Längsstreckverhältnis | Strecktemp. 115 | 100<br>115<br>3,8 | °C<br>°C |
| Fixierung | Temperatur<br>Dauer | | 230<br>3 | °C<br>s |

Es wurde eine Folie mit einer sehr guten Optik (Transparenz, Gelbzahl, Weißgrad) und einem sehr guten Verarbeitungsverhalten erhalten.

Bereits 5ppm Titannitrid zeigten eine deutliche Verbesserung der Temperaturleitfähigkeit. Im Simulationstest zeigte die Folie eine deutliche Erniedrigung der Siegelanspringtemperatur. Der Siegeltest verlief erfolgreich.

**Beispiel 2**

Es wurde Beispiel 1 wiederholt. Die Rezeptur wurde wie folgt modifiziert:
Deckschicht (A), Mischung aus:

| | | |
|---|---|---|
| 67 | Gew.-% | Polyethylenterephthalat mit einem SV-Wert von 800. |
| 12 | Gew.-% | PET-Masterbatch der Fa. PolyOne mit 60 Gew.-% Titandioxid (mittlerer Teilchendurchmesser Titandioxid ca. 0,3 μm). |
| 16 | Gew.-% | Masterbatch aus 99 Gew.-% Polyethylenterephthalat (SV-Wert von 800) und 1,0 Gew.-% Sylobloc 44 H (synthetisches $SiO_2$ der Fa. Grace, mittlerer Teilchendurchmesser ca. 2,5μm) |
| 5 | Gew.-% | PET-Masterbatch der Fa. PolyOne mit 500ppm, Titannitrid (Nanopartikel ca. 60 nm) |

Basisschicht (B):

| | | |
|---|---|---|
| 83 | Gew.-% | Polyethylenterephthalat mit einem SV-Wert von 800 |

(fortgesetzt)

| | | |
|---|---|---|
| 12 | Gew.-% | PET-Masterbatch der Fa. PolyOne mit 60 Gew.-% Titandioxid (mittlerer Teilchendurchmesser Titandioxid ca. 0,3 μm). |
| 5 | Gew.-% | PET-Masterbatch der Fa. PolyOne mit 500ppm Titannitrid (Nanopartikel ca. 60 nm) |

Deckschicht (C):

| | | |
|---|---|---|
| 67 | Gew.-% | Polyethylenterephthalat mit einem SV-Wert von 750. |
| 12 | Gew.-% | PET-Masterbatch der Fa. PolyOne mit 60 Gew.-% Titandioxid (mittlerer Teilchendurchmesser Titandioxid ca. 0,3 μm). |
| 16 | Gew.-% | Masterbatch aus 99 Gew.-% Polyethylenterephthalat (SV-Wert von 800) und 1,0 Gew.-% Sylobloc 44 H (synthetisches $SiO_2$ der Fa. Grace, mittlerer Teilchendurchmesser ca. 2,5μm) |
| 5 | Gew.-% | PET-Masterbatch der Fa. PolyOne mit 500ppm Titannitrid (Nanopartikel ca. 60 nm) |

Die Temperaturleitfähigkeit konnte wie in Beispiel 1 deutlich verbessert werden. Der Simulationstest zeigte ebenfalls wie in Beispiel 1 eine Erniedrigung der Siegelanspringtemperatur. Der Siegeltest verlief erfolgreich.

**Vergleichsbeispiel 1**

Das Beispiel 1 wurde wiederholt jedoch ohne Titannitrid (anstelle dessen wurde Klarrohstoff (PET) eingesetzt).

Die Temperaturleitfähigkeit war wesentlich schlechter als in Beispiel 1. Der Simulationstest zeigte keine Erniedrigung der Siegelanspringtemperatur. Der Siegeltest verlief nicht zufriedenstellend.

**Vergleichsbeispiel 2**

Die Folie aus Beispiel 1 aus EP1176004A1 wurde nachgestellt. Lediglich die Foliendicke wurde auf 50μm verändert. Die Vortrocknung und die anderen beschriebenen Prozessparameter wurden beibehalten.

Die Temperaturleitfähigkeit war wesentlich schlechter als in Beispiel 1. Der Simulationstest zeigte keine Erniedrigung der Siegelanspringtemperatur. Der Siegeltest verlief nicht zufriedenstellend.

Tabelle 2 zeigt die gemessenen Eigenschaften der hergestellten Folien:

**Tabelle 2**

| | Temperaturleitfähigkeit, absolut | Erhöhung d. Temperaturleitfähigkeit* | qualitativer Siegeltest | Gelbzahl | | Schrumpf | | Transparenz |
|---|---|---|---|---|---|---|---|---|
| | [$mm^2/s$] | [%] | | YI | ΔYI | MD [%] | TD [%] | [%] |
| Beispiel 1 | 0,095 | 15,9 | (+++) | -6,0 | -0,4 | 1,1 | 1,0 | 28,5 |
| Beispiel 2 | 0,096 | 17,1 | (+++) | -6,1 | -0,5 | 1,1 | 1,0 | 26,6 |
| | | | | | | | | |
| Vergleichsbeispiel 1 | 0,082 | Standard | (-) | -5,6 | | 1,1 | 1,0 | 28,1 |
| Vergleichsbeispiel 2 | 0,083 | ~0 | (-) | -5,6 | | 1,0 | 1,0 | 29,3 |

* im Vergleich zu einer Folie ohne TiN; d.h.: B1 im Vgl. zu VB1 sowie B2 im Vgl. zu VB1

## Patentansprüche

1. Ein- oder mehrschichtige weiße, biaxial orientierte Polyesterfolie, wobei mindestens eine Schicht, im Falle einer Mehrschichtfolie die Basisschicht (B),

   - als weißfärbendes Pigment Titandioxid in einer Konzentration von 3 bis 15 Gew.-% , und
   - nanopartikuläres Titannitrid in einer Konzentration von 1 bis 25ppm enthält,

   wobei die Gewichtsprozentangaben auf die jeweilige Schicht bezogen sind, in der die angegebenen Materialien enthalten sind.

2. Weiße, biaxial orientierte Polyesterfolie nach Anspruch 1, **dadurch gekennzeichnet, dass** sie gegenüber einer ansonsten identischen Folie, jedoch ohne TiN, eine um mindestens 5% erhöhte Temperaturleitfähigkeit aufweist.

3. Weiße, biaxial orientierte Polyesterfolie nach Anspruch 1 oder 2, **dadurch gekennzeichnet, dass** ihre Temperaturleitfähigkeit $\geq$0,090 $mm^2/s$ beträgt, bei einer Gesamtfoliendicke von 50 $\mu$m.

4. Weiße, biaxial orientierte Polyesterfolie nach Anspruch 1, 2 oder 3, **dadurch gekennzeichnet, dass** die Gesamtfoliendicke 30-105 $\mu$m beträgt (ermittelt mittels Tastermethode nach DIN 53370:2006-11).

5. Weiße, biaxial orientierte Polyesterfolie nach einem der Ansprüche 1 bis 4, **dadurch gekennzeichnet, dass** ihr Weißgrad (nach Berger) mindestens 70 beträgt.

6. Weiße, biaxial orientierte Polyesterfolie nach einem der Ansprüche 1 bis 5, **dadurch gekennzeichnet, dass** ihre Transparenz 15-35% beträgt, bei einer Gesamtfoliendicke von 50 $\mu$m.

7. Weiße, biaxial orientierte Polyesterfolie nach einem der Ansprüche 1 bis 6, **dadurch gekennzeichnet, dass** ihr Schrumpf, gemessen nach 15 Min. Temperung bei 150°C nach ASTM D2732-83, in Maschinenrichtung (MD) 0,7-2,0% und in Querrichtung (TD) -0,5-2,0% beträgt.

8. Weiße, biaxial orientierte Polyesterfolie nach einem der Ansprüche 1 bis 7, **dadurch gekennzeichnet, dass** die mittlere Primärteilchengröße ($d_{50}$) der TiN-Partikel unter 100 nm liegt.

9. Weiße, biaxial orientierte Polyesterfolie nach einem der Ansprüche 1 bis 8, **dadurch gekennzeichnet, dass** die $TiO_2$-Partikel in der Rutil-Modifikation vorliegen.

10. Weiße, biaxial orientierte Polyesterfolie nach einem der Ansprüche 1 bis 9, **dadurch gekennzeichnet, dass** die mittlere Teilchengröße ($d_{50}$) der $TiO_2$-Partikel 0,5 und 0,1 $\mu$m beträgt.

11. Weiße, biaxial orientierte Polyesterfolie nach einem der Ansprüche 1 bis 10, **dadurch gekennzeichnet, dass** die $TiO_2$-Partikel anorganisch beschichtet/dotiert und optional zusätzlich organisch beschichtet sind.

12. Verfahren zur Herstellung einer weißen, biaxial orientierten Polyesterfolie nach Anspruch 1, wobei die Folienrohstoffe für die einzelnen Schichten der Folie in Extrudern aufgeschmolzen, homogenisiert, durch eine Breitschlitzdüse auf eine Kühlwalze ausgepresst und dort zu einer Vorfolie abgekühlt werden, danach die Vorfolie in Längs- und Querrichtung streckorientiert, hitzefixiert und schließlich aufgewickelt wird, wobei mindestens eine Schicht, im Falle einer Mehrschichtfolie die Basisschicht (B),

    - als weißfärbendes Pigment Titandioxid in einer Konzentration von 3 bis 15 Gew.-% , und
    - nanopartikuläres Titannitrid in einer Konzentration von 1 bis 25ppm enthält,

    wobei die Gewichtsprozentangaben auf die jeweilige Schicht bezogen sind, in der die angegebenen Materialien enthalten sind.

13. Verwendung einer weißen, biaxial orientierten Polyesterfolie nach einem der Ansprüche 1 bis 11 als Verpackungsfolie.

14. Verwendung nach Anspruch 13 als Joghurtdeckel.

## Claims

1. A single or multilayer white biaxially oriented polyester film, wherein at least one layer in the case of a multilayer film the base layer (B) comprises

    - titanium dioxide as a whitening pigment in a concentration of 3 to 15 wt.-% and
    - nanoparticulate titanium nitride in a concentration of 1 to 25 ppm, wherein the weight percent values are based on the respective layer which contains above materials.

2. White biaxially oriented polyester film according to claim 1, **characterized in that** the film has a thermal conductivity increased by at least 5 % compared to an otherwise identical film, but without TiN.

3. White biaxially oriented polyester film according to claim 1 or 2, **characterized in that** it has a thermal conductivity $\geq$ 0,090 $mm^2/s$ at a total film thickness of 50 $\mu$m.

4. White biaxially oriented polyester film according to claim 1, 2 or 3, **characterized in that** the total thickness of the polyester film is 30-105 $\mu$m (determined by a scanning method according to DIN 53370:2006-11).

5. White biaxially oriented polyester film according to one of claims 1 to 4, **characterized in that** the whiteness degree of the film is at least 70 according to Berger.

6. White biaxially oriented polyester film according to one of claims 1 to 5, **characterized in that** the transparency of the polyester film is 15-35 % at a total film thickness of 50 $\mu$m.

7. White biaxially oriented polyester film according to one of claims 1 to 6, **characterized in that**, measured after 15 minutes of annealing at 150 °C according to ASTM D2732-83, the shrinkage of the polyester film is 0.7-2.0 % in machine direction (MD) and -0.5-2.0 % in transverse direction (TD).

8. White biaxially oriented polyester film according to one of claims 1 to 7, **characterized in that** the average primary particle size ($d_{50}$) of the TiN particles is less than 100 nm.

9. White biaxially oriented polyester film according to one of claims 1 to 8, **characterized in that** the $TiO_2$ particles are present in the rutile modification.

10. White biaxially oriented polyester film according to one of claims 1 to 9, **characterized in that** the average particle size ($d_{50}$) of the $TiO_2$ particles is 0.5 and 0.1 $\mu$m.

11. White biaxially oriented polyester film according to one of claims 1 to 10, **characterized in that** the $TiO_2$ particles are inorganic coated/doped and optionally additionally organic coated.

12. A method for the production of a white biaxially oriented polyester film according to claim 1 wherein the film raw materials for the single layers of the polyester film are melted in extruders, homogenised, extruded through a slot die onto a chill roll and cooled therein to pre-film, then the precursor film stretch-oriented in the longitudinal and transverse directions, heat-set and finally wound up, wherein at least one layer in the case of a multilayer film the base layer (B) comprises

    - titanium dioxide as a whitening pigment in a concentration of 3 to 15 wt.-% and
    - nanoparticulate titanium nitride in a concentration of 1 to 25 ppm,

    wherein the weight percent values are based on the respective layer which contains above materials.

13. Use of a white biaxially oriented polyester film according to one of claims 1 to 11 as a packaging film.

14. Use according to claim 13 as a lid for yoghurt cups.

## Revendications

1. Film de polyester blanc monocouche ou multicouche à orientation biaxiale, dans lequel au moins une couche, la couche de base (B) dans le cas d'un film multicouche, contient

   - en tant que pigment de coloration blanche du dioxyde de titane en une concentration allant de 3 à 15 % en poids, et
   - du nitrure de titane nanoparticulaire en une concentration allant de 1 à 25 ppm,

   dans lequel les indications en pourcentages de poids se rapportent à la couche respective, dans laquelle les matériaux indiqués sont contenus.

2. Film de polyester blanc à orientation biaxiale selon la revendication 1, **caractérisé en ce qu'**il présente, par rapport à un film autrement identique, toutefois sans TiN, une conductivité thermique plus élevée d'au moins 5 %.

3. Film de polyester blanc à orientation biaxiale selon la revendication 1 ou 2, **caractérisé en ce que** sa conductivité thermique est $\geq$ 0,090 $mm^2/s$, pour une épaisseur de film totale de 50 $\mu$m.

4. Film de polyester blanc à orientation biaxiale selon la revendication 1, 2 ou 3, **caractérisé en ce que** l'épaisseur de film totale est de 30 - 105 $\mu$m (déterminée au moyen de la méthode de palpation selon la norme DIN 53370:2006-11).

5. Film de polyester blanc, à orientation biaxiale selon l'une quelconque des revendications 1 à 4, **caractérisé en ce que** sa blancheur (selon Berger) est d'au moins 70.

6. Film de polyester blanc à orientation biaxiale selon l'une quelconque des revendications 1 à 5, **caractérisé en ce que** sa transparence est de 15 - 35 %, pour une épaisseur de film totale de 50 $\mu$m.

7. Film de polyester blanc à orientation biaxiale selon l'une quelconque des revendications 1 à 6, **caractérisé en ce que** sa rétractation, mesurée après 15 minutes à une température de 150 °C selon la norme ASTM D2732-83, est dans la direction de machine (MD) de 0,7 - 2,0 % et dans la direction transversale (TD) de -0,5 - 2,0 %.

8. Film de polyester blanc à orientation biaxiale selon l'une quelconque des revendications 1 à 7, **caractérisé en ce que** la taille des particules primaires ($d_{50}$) moyenne des particules de TiN est inférieure à 100 nm.

9. Film de polyester blanc à orientation biaxiale selon l'une quelconque des revendications 1 à 8, **caractérisé en ce que** les particules de $TiO_2$ sont présentes lors de la modification en rutile.

10. Film de polyester blanc à orientation biaxiale selon l'une quelconque des revendications 1 à 9, **caractérisé en ce que** la taille des particules ($d_{50}$) moyenne des particules de $TiO_2$ est de 0,5 et 0,1 $\mu$m.

11. Film de polyester blanc à orientation biaxiale selon l'une quelconque des revendications 1 à 10, **caractérisé en ce que** les particules de $TiO_2$ sont revêtues/dopées inorganiquement et, en option et en supplément sont revêtues organiquement.

12. Procédé servant à fabriquer un film de polyester blanc à orientation biaxiale selon la revendication 1, dans lequel la matière brute de film est fondue pour les diverses couches du film, dans des extrudeuses, est homogénéisée, est pressée par une buse à fente large sur un cylindre de refroidissement et y est refroidie pour former un film de départ, puis le film de départ est orienté par étirage dans la direction longitudinale et la direction transversale, est fixé sous l'action de la chaleur et est pour finir enroulé, dans lequel au moins une couche, la couche de base (B) dans le cas d'un film multicouche, contient

    - en tant que pigment de coloration blanche du dioxyde de titane en une concentration allant de 3 à 15 % en poids, et
    - du nitrure de titane nanoparticulaire en une concentration allant de 1 à 25 ppm,

    dans lequel les indications en pourcentages de poids se rapportent à la couche respective, dans laquelle les matériaux indiqués sont contenus.

13. Utilisation d'un film de polyester blanc à orientation biaxiale selon l'une quelconque des revendications 1 à 11 en tant que film d'emballage.

14. Utilisation selon la revendication 13 en tant qu'opercule de yaourt.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102005058917 A1
- EP 1176004 A1
- US 7368523 B2
- EP 2270094 A1
- JP 61278558 A
- JP 6279599 A


### In der Beschreibung aufgeführte Nicht-Patentliteratur


- **J. BOTT ; A. STÖRMER ; G. WOLZ ; R. FRANZ.** Studies on the migration of titanium nitride nanoparticles in polymers. *Poster presentation at the 5th international Symposium on Food Packaging,* 14. November 2012
- **HANS LOOS.** Farbmessung. Verlag Beruf und Schule, 1989